# EUROPEAN PATENT APPLICATION

(11) **EP 1 626 478 A2**
(43) Date of publication of application: **15.02.2006**
(21) Application number: 05255019.1
(22) Date of filing: 12.08.2005
(51) Int. Cl.: H02K 5/12

(54) **Wet rotor circulators**

(30) Priority: 13.08.2004 US 917878
(71) Applicant: TACO, INC., Cranston Rhode Island 02920 (US)
(72) Inventor: Castellone, Joseph, Cranston Rhode Island 02920 (US); Genga, Richard A., Jr., East Greenwich Rhode Island 02818 (US); Nelsen, Daniel J., Providence Rhode Island 02903 (US); Sirotin, Justin W., Providence Rhode Island 02906 (US); Schinazi, Alan D., Providence Rhode Island 02906 (US); Parent, Thomas G., Providence Rhode Island 02906 (US)
(74) Representative: Charig, Raymond Julian

(57) **Abstract**

Wet rotor circulators are provided, in which a fixed volume of a control fluid is sealed within the rotor chamber, and the rotor chamber is sealed against entry of the circulating system fluid.

## Description

### TECHNICAL FIELD

This invention relates to wet rotor circulators, for use, for example, in hydronic heating systems.

### BACKGROUND

Circulators are commonly used to circulate heated water or ethylene glycol solution through hydronic heating systems. Such circulators generally include an impeller that is driven by a motor that consists of a rotor that turns in response to a magnetic field generated by a stator that surrounds the rotor. One type of circulator is the so-called "wet rotor circulator," in which the rotor is supported within a rotor chamber into which the fluid being circulated (the "system fluid") is allowed to enter. The rotor chamber includes a rotor sleeve that is supported within the surrounding stator. The stator is sealed from the system fluid that circulates through the rotor chamber. Typically, the rotor shaft is supported by a pair of rotor bearings, one positioned above the rotor and the other positioned below the rotor. The system fluid helps to lubricate the rotor bearings and dampen noise generated by the motor. However, the system liquid often carries contaminants such as lime and other minerals, e.g., iron oxide, which tend to deposit on the hot rotor shaft and rotor bearing races.

### SUMMARY

The present invention features wet rotor circulators in which the rotor chamber is sealed from the system fluid, and contains a sealed volume of a control liquid. Generally, the control liquid is substantially free of contaminants that would deposit on the rotor shaft. Thus, lubrication and noise dampening are provided without corrosion or damage to the rotor or other parts of the motor.

In one aspect, the invention features a circulator for circulating fluid within a hydronic heating or cooling system, including a wet rotor circulator motor that includes (a) a motor housing, (b) a stator disposed within the motor housing and sealed from the circulating fluid, (c) a rotor chamber disposed within the stator, the rotor chamber also being sealed from the circulating fluid so that the circulating fluid does not enter the rotor chamber, (d) a control fluid sealed within the rotor chamber, (e) a rotor disposed within the rotor chamber and in contact with the control fluid, and (f) an impeller affixed to one end of the rotor, the stator and rotor configured with respect to one another so that the rotor is caused to rotate when the stator is energized. The circulator also includes a pump casing fastened to the motor housing, the pump casing including an inlet end for accepting the circulating fluid flowing into the pump casing, the inlet end being configured for attachment to a pipe of the hydronic heating system, a casing volute into which the impeller extends from the motor, the casing volute being in fluid communication with the inlet of the pump casing, and an outlet end for discharging the circulating fluid flowing from the pump casing, the outlet end being configured for attachment to a pipe of the hydronic heating system.

Some implementations include one or more of the following features. The rotor chamber may be sealed from the circulating fluid by a pressure-equalizing seal. The pressure-equalizing seal may include a diaphragm seal. Alternatively, the pressure-equalizing seal may include a bellows seal or a dynamic piston seal. The rotor chamber may also be sealed from the circulating fluid by a mechanical seal comprising a rotating component and a stationary component. In this case, the rotating component may be configured to be press-fit around a shaft portion of the rotor, and the stationary component may be configured to be press-fit into a receiving portion of the motor housing. The mechanical seal may be configured to act as a thrust bearing, inhibiting axial movement of the rotor towards the impeller. In other implementations, the rotor chamber may be sealed from the circulating fluid by a dynamic seal selected from the group consisting of v-seals and lip seals. The circulator may further include a rotor bushing/thrust washer assembly positioned and configured to support the rotor at an end of the rotor opposite the end to which the impeller is affixed. The rotor bushing may be formed, for example, of an engineered polymer.

In another aspect, the invention features wet rotor circulator motors having any of the features discussed above.

The invention also features wet rotor circulator motors that include (a) a motor housing, (b) a stator disposed within the motor housing and sealed from the circulating fluid, (c) a rotor chamber disposed within the stator, (d) a rotor disposed within the rotor chamber and including a rotor shaft, (e) a dynamic seal positioned to seal against the rotor shaft on a first side of the rotor, and configured to inhibit axial movement of the rotor in a first direction, (f) a rotor bushing/thrust washer assembly positioned around the rotor shaft on a second side of the rotor and configured to inhibit axial movement of the rotor in a second direction, and (g) an impeller affixed to one end of the rotor shaft, the stator and rotor configured with respect to one another so that the rotor is caused to rotate when the stator is energized. The invention also features circulators including such motors.

In yet a further aspect, the invention features a circulator for circulating fluid within a hydronic heating or cooling system, including a wet rotor circulator motor and a pump casing. The wet rotor circulator motor includes a motor housing, a stator disposed within the motor housing, a rotor chamber disposed within the stator, a rotor disposed within the rotor chamber, and an impeller affixed to one end of the rotor, the stator and rotor configured with respect to one another so that the rotor is caused to rotate when the stator is energized. The pump casing is fastened to the motor housing and includes an inlet end for accepting circulating fluid flowing into the pump casing, the inlet end being configured for attachment to a pipe of the hydronic heating system, a casing volute into which the impeller extends from the motor, the casing volute being in fluid communication with the inlet of the pump casing, and an outlet end for discharging the circulating fluid flowing from the pump casing, the outlet end being configured for attachment to a pipe of the hydronic heating system. The motor housing and pump casing are configured so that the pump casing may be fastened to the motor housing by rotating the pump casing with respect to the motor housing.

For example, the motor housing and pump casing may be configured so that they may be joined by a quarter turn rotation. A pin and groove attachment system, e.g., a pin on the motor housing and a corresponding groove on the pump casing, or vice versa, may be used to join the two parts. Joining the motor housing and pump casing by rotational engagement allows the parts to be easily assembled, without the needs for bolts or other fasteners, and to be easily disassembled for servicing of the circulator.

The details of one or more embodiments of the invention are set forth in the accompanying drawings and the description below. Other features and advantages of the Invention will be apparent from the description and drawings, and from the claims.

### DESCRIPTION OF DRAWINGS

FIG 1 is a perspective view of a wet rotor circulator
FIG. 2 is a sectional perspective view of the wet rotor circulator shown in FIG 1.
FIGS. 3-3C are, respectively, a top view, a cross-sectional view taken along line A-A of FIG. 3, a bottom view and a perspective view of a diaphragm used in the circulator of FIG. 1.
FIGS. 4-4A are, respectively, top and perspective views of a press ring that is used to secure the diaphragm of FIGS. 3-3C.
FIG. 5 is an enlarged sectional perspective view of the spring-loaded lip seal used in the circulator of FIG. 1.
FIG. 6 is an enlarged sectional perspective view of a rotor bushing/thrust dampening washer assembly, rotor and rotor shaft used in the circulator of FIG. 1. FIG. 6A is a highly enlarged diagrammatic sectional view of the thrust dampening washer used in the assembly shown in FIG 6.
FIGS. 7-7H are diagrammatic perspective views illustrating steps in a process for assembling the circulator shown in FIG. 1.
FIG. 8 is a sectional perspective view of a circulator according to an alternative embodiment of the invention.
FIG. 9 is a sectional perspective view of a circulator according to another alternative embodiment of the invention.
FIG 10 is an exploded sectional perspective view of a mechanical seal which may be used in the circulator of FIG. 9.

### DETAILED DESCRIPTION

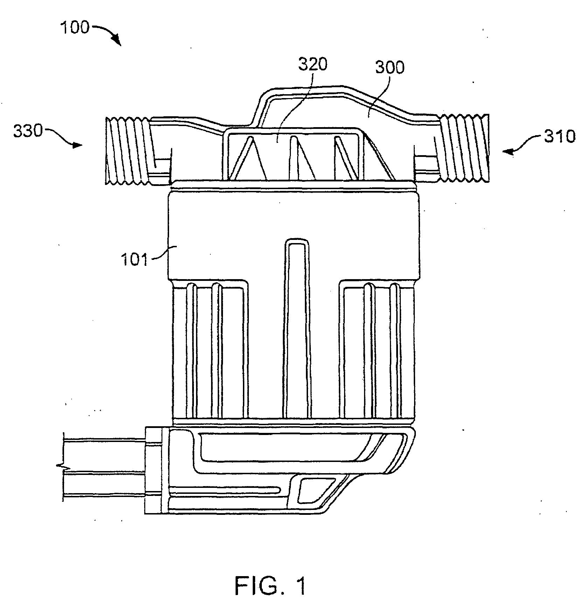

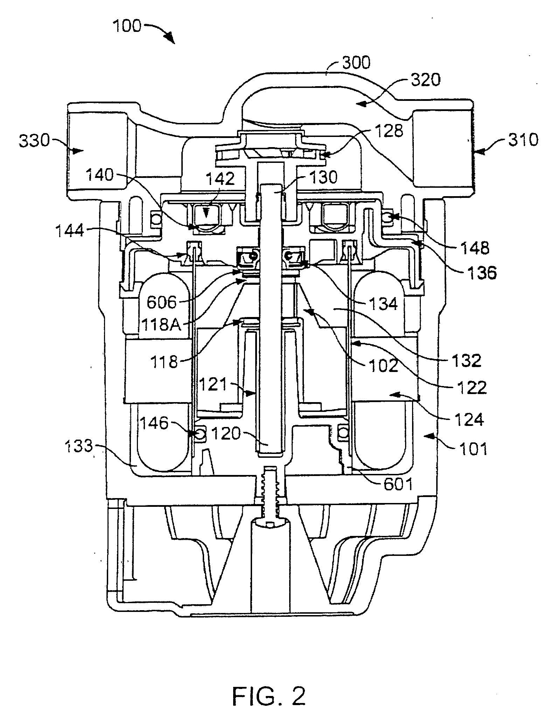

Referring to FIG. 1, a wet rotor circulator 100 includes a motor housing 101 containing a motor (shown in FIG. 2 and described below) and a pump casing 300 (also referred to as a volute). The pump casing 300 defines an inlet 310, a casing volute 320 containing an impeller 128 (FIG. 2), and an outlet 330. When the motor is activated, fluid flows into the inlet end 310 and passes into the casing volute 320. The fluid flows into the center of the impeller 128 and is spun outward, passing out of the pump casing via the outlet end 330. The circulator may include a controller (not shown). A suitable controller is described, e.g., in U.S. Patent No. 5,443,207, the complete disclosure of which is incorporated herein by reference. In operation, when a thermostat (not shown) closes due to a temperature change in the area of the building being served by the circulator, the controller causes line voltage to flow to the circulator 100, activating the pump, which circulates fluid through the hydronic heating or cooling system.

With reference to FIG. 2, the circulator 100 includes a rotor sleeve 122 that defines a rotor chamber 132, and, within the rotor sleeve, a rotor assembly that consists of rotor 102, rotor shaft 120, and a thrust dampening washer 118 and rotor bushing 121 which together act as a bearing to support the rotor. The rotor sleeve 122 is located in the center of the stator 124, which is contained within the motor housing 101. The impeller 128, mounted on one end 130 of the rotor shaft, protrudes into the pump casing 300 and performs the pumping action. When the windings of the stator are electrically excited, the magnetic field created interacts with the windings of the rotor, causing rotor 102 and shaft 120 to rotate. This rotation in turn rotates the impeller 128, causing the circulating or system fluid to flow through the casing volute 320.

As discussed above in the Background section, a portion of the system fluid passes through the rotor chamber, exposing the rotor and other components in the rotor chamber to contaminants and thus to potential corrosion and damage. To protect the rotor from contaminants in the system fluid, in the wet rotor circulator 10 the rotor chamber 132 is sealed from the system fluid. A control fluid is sealed within this chamber. The control fluid serves several purposes, including (a) lubricating the bearing that supports the rotor (i.e., the rotor bushing and thrust dampening washer), thus preventing excessive wear; (b) providing rotor cooling; and (c) providing noise dampening. The stator chamber 133, defined between the outer surface of the rotor sleeve 122, the inner surface of the motor housing 101, which houses the stator, and the upper cap 136, is sealed from all fluid - both the system fluid and the control fluid - to protect the stator.

The rotor chamber 132 is sealed from the system fluid by two seals: a two-part, spring biased lip seal 134 that seals around the upper end of the rotor shaft, where the rotor shaft extends upward through upper cap 136; and a diaphragm seal 140 that serves to equalize pressure between the rotor chamber 132 and the casing volute 320 during temperature excursions. Diaphragm seal 140 is held in place by a press ring 142. Both of these seals are discussed in further detail below. It is generally important that the lip seal allow little or no leakage of system fluid into the rotor chamber, as intrusion of system fluid into the rotor chamber could cause the diaphragm seal to expand beyond its design limits, and/or could cause undesirable contamination of the control fluid.

The control fluid is sealed within the rotor chamber 132 by these seals, and also by a pair of static seals that seal the upper and lower periphery of the rotor sleeve 122: a sleeve seal 144 at the upper periphery, and an o-ring 146, mounted on a lower cap 601, at the lower periphery.

The stator chamber 133 is sealed against the control fluid by the seals discussed above, and is sealed against the system fluid by a hydraulic casing o-ring 148. O-ring 148 provides a seal between the pump casing 300 and the upper cap 136.

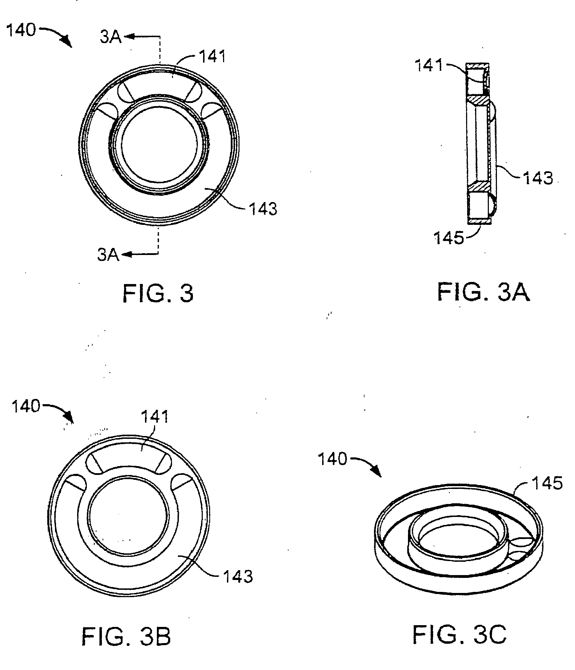

The diaphragm seal 140, shown in detail in FIGS. 3-3C, is designed to equalize pressure between the system fluid and the rotor chamber, preferably maintaining a negligible pressure differential (e.g., less than 2 psi, preferably less than 0.5 psi, more preferably zero) during a temperature change of up to 300°F, e.g., during temperature cycling between about 10°F and 300°F. Such temperature cycling typically occurs when the motor turns on and off, causing thermal expansion of the system fluid. Maintaining a small (preferably zero) pressure differential helps to extend the life of the lip seal and generally decreases power consumption due to the lower rotary force required to turn the lip seal. The diaphragm includes a first portion 141, designed to accommodate cooling below room temperature (e.g., from about 70°F down to 10°F), and a second, larger portion 143, designed to accommodate heating above room temperature (e.g., from about 70°F up to 300°F). When the diaphragm seal 140 is in place, e.g., as shown in FIG. 2, the first portion 141 bulges upward and the second portion 143 bulges downward under room temperature conditions. The first and second portions have a wall thickness and flexibility of the diaphragm seal that are selected to provide the desired low or zero pressure differential under the expected temperature cycling conditions. The wall thickness may be, for example, about 0.015 to 0.030 inch. An example of a material that is suitable for use in the diaphragm seal is peroxide-cured EPDM rubber. Other suitable materials include other elastomers that provide good age-hardening characteristics (i.e., that will not lose its sealing properties due to embrittling or cracking during the expected life of the product, which may be up to 7 to 10 years.) Suitable materials are pliable and elastic, and may have a hardness of about 50-70 Shore A.

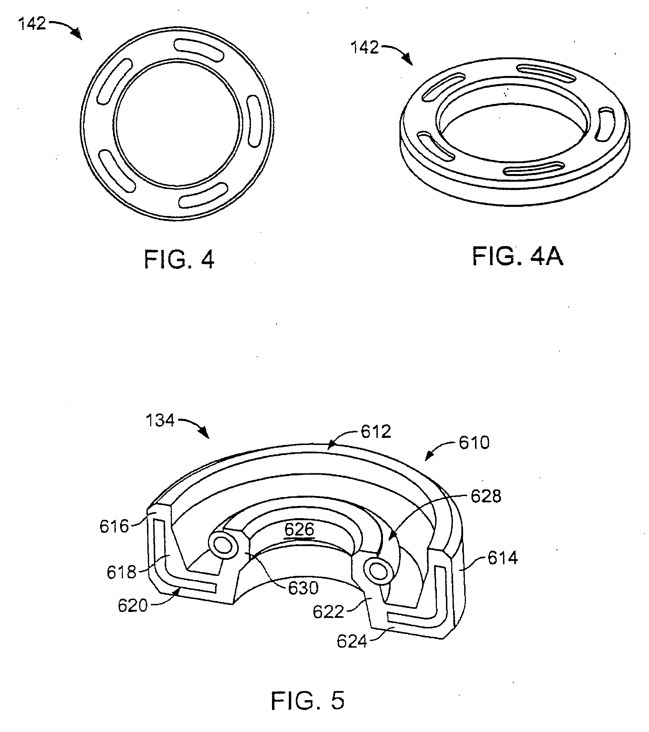

The press ring 142, which both seals and holds the diaphragm in place, is shown in FIGS. 4-4A. The press ring is dimensioned to hold the diaphragm seal in place by an interference fit. The rim 145 (FIG. 3C) of the diaphragm seal is stretched around the press ring, and the press ring is then pressed into a receiving portion of the upper cap 136. Pressing the press ring into the upper cap in this manner compresses the elastomeric diaphragm seal, providing a static seal between the system fluid and the control fluid. Generally, the press ring is formed of a material that will not corrode, e.g., a non-ferrous material such as stainless steel.

The spring loaded lip seal 134 is shown in detail in FIG. 5. Lip seal 134 includes an elastomeric body 610 that includes an outer skirt 612 that defines a generally cylindrical outer wall 614 and that includes a rim portion 616 and a base portion 618 having a greater wall thickness than the rim portion 616. The outer skirt 612 is press fit into a receiving bore of the upper cap 136 (FIG. 2) to provide a static seal. A support member 620, e.g., of stainless steel, is embedded in the base portion 618 to provide the outer skirt with dimensional stability and prevent the lip seal from being dislodged from the bore. Support member 620 is generally L-shaped in cross-section, as shown. The outer skirt 612 is joined to an inner dynamic sealing portion 622 by a web 624 in which is embedded a portion of the support member 620. The web 624 and support member 620 maintain the outer skirt and inner dynamic sealing portion in a desired spaced relationship. Inner dynamic sealing portion 622 defines an inner wall 626 that forms a dynamic seal against the rotating rotor shaft 120 (FIG. 2) when the circulator is in use. The inner diameter of the cylindrical wall 626 is slightly smaller than the outer diameter of the rotor shaft (e.g., by 0.6 to 0.7 mm), and thus a vlater-tight seal is formed. This seal is enhanced by the pressure applied by coil spring 628, e.g., a stainless steel spring. Coil spring 628 applies comprsssive pressure to an outer surface 630 of the sealing portion 622 adjacent to the inner wall 626, which assists in maintaining the dynamic seal over time, e.g., if the elastomeric material stretches and/or age hardens.

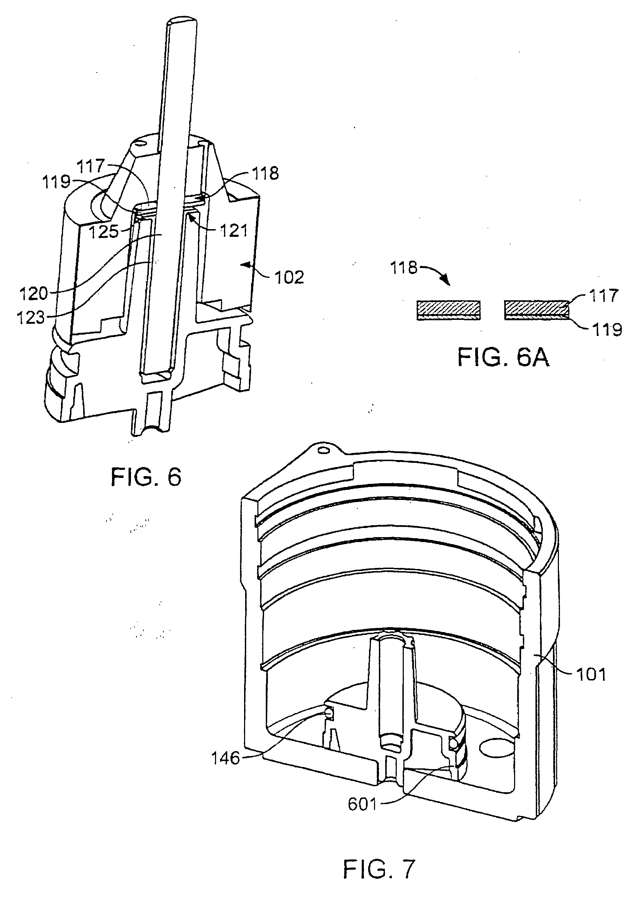

The rotor bushing/washer assembly and the thrust-dampening washer used therein are shown in detail in FIGS. 6 and 6A, respectively. Referring to FIG. 6A, the thrust-dampening washer 118 includes an elastomeric portion 117 overmolded onto a rigid washer 119, e.g., a stamped stainless steel washer. The elastomeric portion may be formed of EPDM or other suitable resilient material, and is preferably of sufficient thickness to provide noise and vibration dampening, e.g., about 1 to 2 mm. Generally, a relatively soft elastomer is preferred for good dampening, e.g., an elastomer having a hardness of less than 70 Shore A, more preferably from about 40 to 60 Shore A.

The rotor 102 is supported from below by the rotor bushing 121 and the thrust-dampening washer 118. The lip seal 134 is not configured to act as a thrust bearing, and thus a thrust bearing 606 and a thrust dampening washer 118A are generally provided above the rotor, as shown in FIG. 2. The thrust dampening washer 118A is generally similar in structure to the thrust-dampening washer 118. The thrust bearing 606 is generally formed of a low friction engineered polymer or other material having good durability and lubricity, allowing the thrust bearing to provide a lubricious interface between the stainless steel portion of the thrust dampening washer 118A and the lip seal 134. This lubricious interface prevents damage to the lip seal and minimizes noise. The use of the thrust bearing 606, the thrust dampening washer 118A, and the rotor bushing/washer assembly 121/118, instead of upper and lower sleeve bearings, may facilitate assembly of the circulator and minimize alignment issues.

Referring to FIG. 6, the rigid washer 119 interfaces with the rotor bushing 121, providing a dynamic thrust bearing with a low coefficient of friction to minimize torque and thus power consumption and provide good pump efficiency. The rotor bushing 121 is preferably a single, integral part, and includes a sleeve portion 123 and a thrust portion 125. The rotor bushing may be formed, for example, of a low friction engineered polymer that performs well in a wet environment. The bushing may also be formed of alumina ceramic or carbon. The material of which the rotor bushing is formed should generally have a sufficiently high pressure velocity rating so as to enable the thrust portion to withstand the expected load without excessive wear. For some applications, the rotor bushing should be capable of withstanding an axial load of up to 27 pounds over the life of the product, e.g., at least 7 years of intermittent duty (i.e., 25,000 hours/year operation averaged over the 7 year period, with 85,000-90,000 starts and stops during the 7 year period). Some preferred circulators include rotor bushings capable of withstanding such loads over a 10 year period of intermittent use.

Suitable control fluids are capable of withstanding the expected use environment of the circulator, e.g., the temperature and pressure range that is the circulator is expected to be exposed to. Preferred control fluids are substantially free of contaminants that would be likely to cause corrosion of or damage to the rotor and/or bearing surfaces, e.g., lime and iron oxide. Suitable control fluids include deionized water, dielectric fluid, glycols (e.g., ethylene and/or propylene glycol), and solutions of deionized water and glycol(s). The control fluid may include one or more additives, e.g., corrosion inhibitors. If the system fluid could be used for bathing and/or drinking, it may be desirable for the control fluid to be a food-grade fluid, in case of leakage of the control fluid from the rotor chamber. It is generally necessary that the control fluid be compatible with the materials used in the components that it will be in contact with. For many applications it is preferred that the control fluid be capable of operating at temperatures ranging between about 25°F and 300°F.

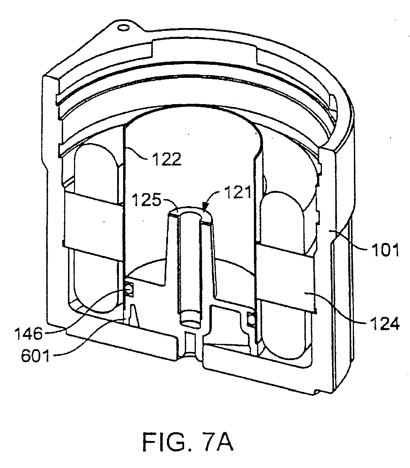

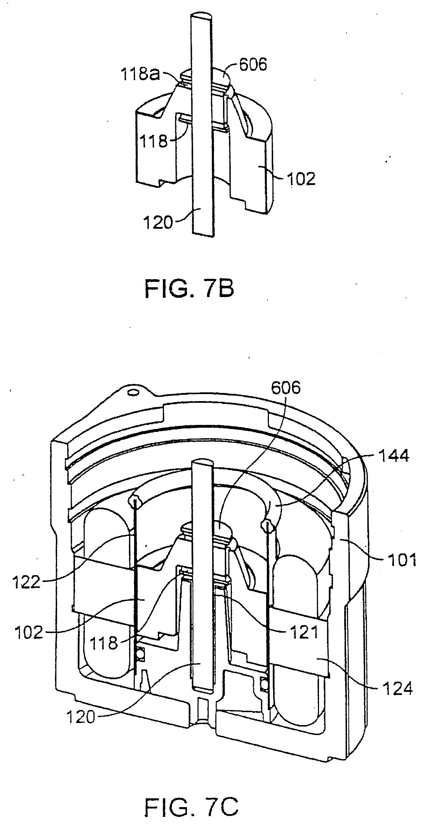

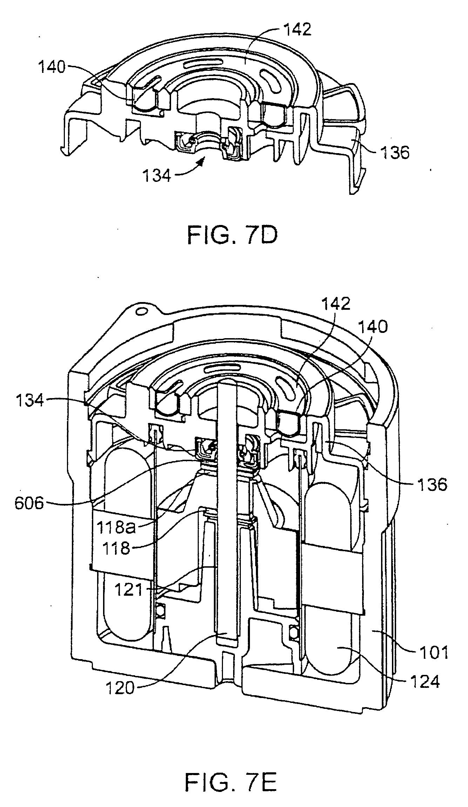

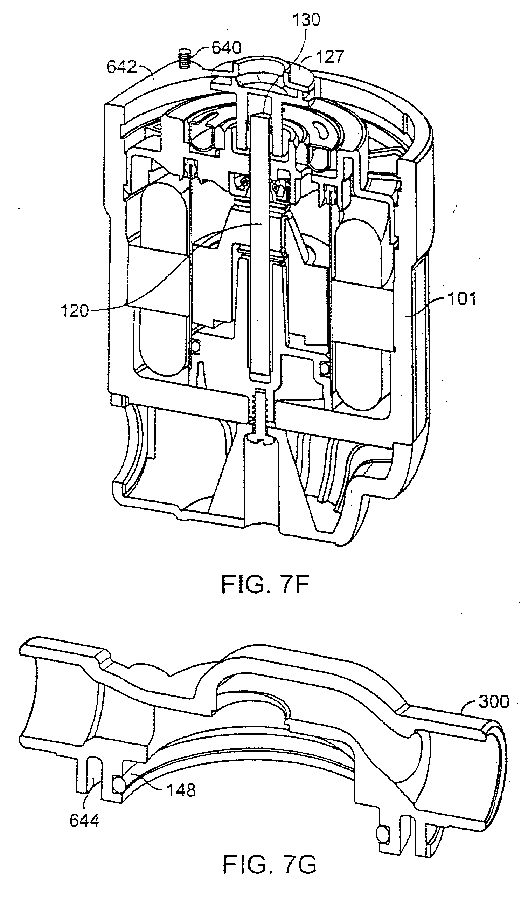

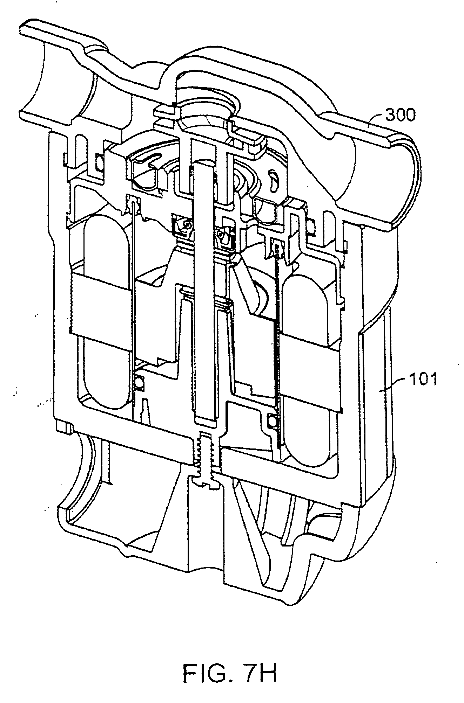

A process for assembling the circulator is shown diagrammatically in FIGS. 7-7H. First, the lower cap 601 and the o-ring 146 that seals against the lower periphery of the rotor sleeve are placed in the motor housing 101 (Fig. 7), followed by the stator 124, rotor sleeve 122, and rotor bushing 121 (Fig. 7A). Next, the rotor 102, rotor shaft 120, thrust bearing 606, and thrust dampening washers 118 and 118A are assembled as a sub-assembly (Fig. 7B) and placed in the motor housing 101 (Fig. 7C). The upper sleeve seal 144 is applied to the rotor sleeve 122 in the same step (Fig. 7C). The upper cap 136, diaphragm seal 140, press ring 142, and lip seal 134 are assembled as a sub-assembly (Fig. 7D) and placed in the motor housing (Fig. 7E). The impeller 128 is then mounted a1 end 130 of the rotor shaft 120 (Fig. 7F), o-ring 148 is mounted in the pump casing 300 (Fig. 7G) and the pump casing 300 is secured to the motor housing 101 (Fig. 7H). The pump casing 300 may be easily and quickly secured to the motor housing by a quarter-turn, by engaging pin 640 (FIG. 7F) on flange 642 of the motor housing with corresponding locking groove 644 on the pump casing 300 (FIG. 7G).

The rotor chamber 132 is filled with a sufficient amount of control fluid so that when the rotor and other components are inserted the rotor chamber will be completely filled with fluid. The control fluid may be added before, during, and/or after the rotor is inserted, all at once or in several stages. Any remaining air is evacuated from the rotor chamber, so that there will be no air to be compressed when the circulator is pressurized during operation. The control fluid is generally added at ambient manufacturing temperatures (typically 60-90°F).

A number of embodiments of the invention have.been described. Nevertheless, it will be understood that various modifications may be made without departing from the spirit and scope of the invention.

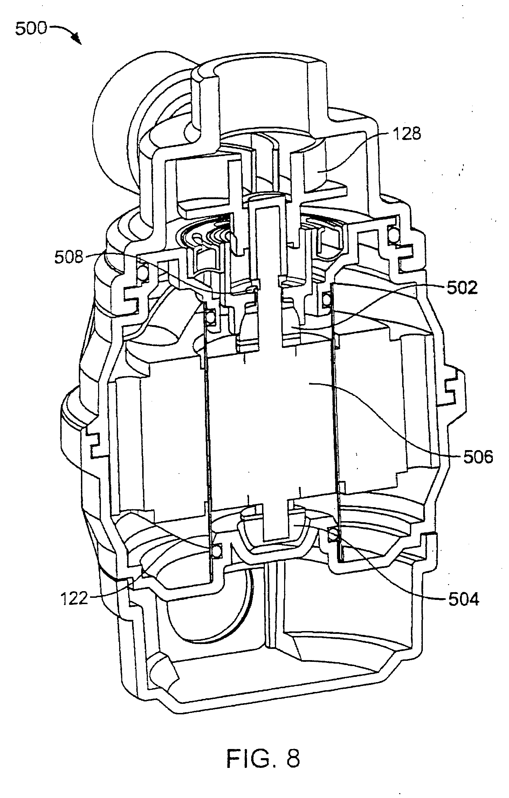

For example, while it is generally preferred that the circulator include a single bearing, as discussed above, if desired two bearings may be used. Referring to FIG. 8, circulator 500 includes a pair of upper and lower sleeve bearings 502, 504 that support rotor 506.

Moreover, other types of pressure-equalizing seals may be used in place of the diaphragm seal discussed above. For example, the pressure-equalizing seal may be a bellows seal, for example formed of an elastomeric material or a non-ferrous metal that can perform under the anticipated thermal cycling conditions without failure due to fatigue. Another example of a suitable pressure-equalizing seal is a dynamic piston seal configured to move axially to accommodate the thermal expansion.

Additionally, the lip seal shown in FIGS. 2 and 5 may be replaced with other types of seals that provide similar dynamic sealing performance. For example, the seal may be a v-ring seal 508, as shown in FIG. 8. Other suitable dynamic seals include spring loaded and non-spring loaded, single, double and triple lip seals.

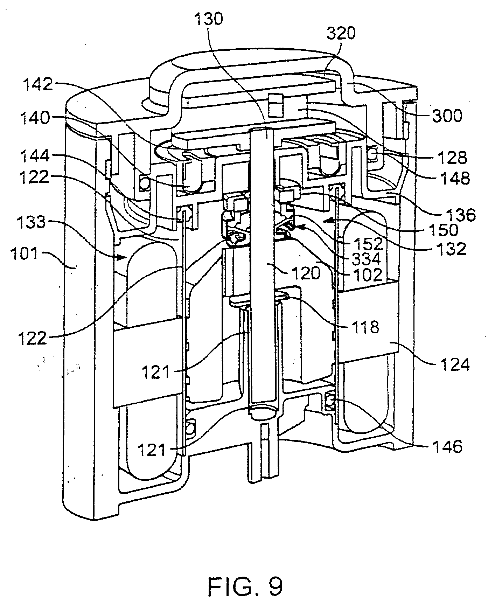

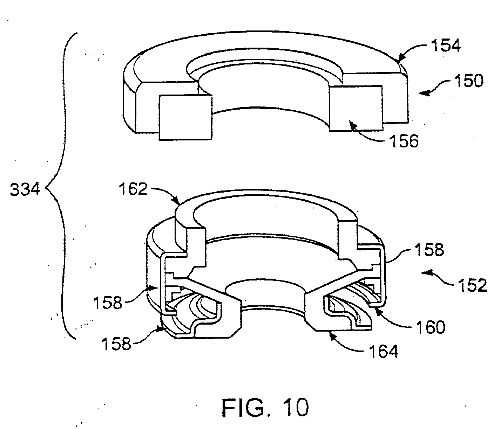

The lip seal may also be replaced by a two-part mechanical seal, as shown in FIG 9. A suitable two-part mechanical seal 334 is shown in detail in FIG. 10. As shown in FIG 10, the mechanical seal 334 includes a stationary component 150 and a rotating component 152. The stationary component includes an elastomeric boot 154, e.g., formed of EPDM rubber or other resilient material that resists age-hardening, and a stationary rigid seal 156. Preferably the rigid seal is formed of a material that performs well in abrasive environments, for example silicon carbide. The stationary component 150 is press-fit into a receiving portion of the upper cap 136, compressing the elastomeric boot to form a static seal. The rotating component 152 includes a metal collar 158 and, within the collar, a compression spring 160, a rotating primary shaft seal 162, and an elastomeric secondary shaft seal 164. The primary shaft seal 162 rotates against the stationary rigid seal 156, therehy providing a dynamic rotary interface between these two rigid components. The seconday shaft seal 164 is press fit onto the rotor shaft, providing a static seal against the shaft. The compression spring 160 biases the rotating component 152 against the stationary component 150, while also allowing the mechanical seal to act as a vibration dampener (a dynamic thrust bearing) which inhibits upward axial movement of the rotor. Preferably, the collar and spring are formed of stainless steel, to resist corrosion, and the primary shaft seal is formed of a material that performs well in an abrasive environment, e.g., silicon carbide. The secondary shaft seal may be formed of EPDM or other suitable elastomeric material.

Moreover, the circulator may include a different type of motor. For example, the motor may be any type of AC or DC motor with either a permanent magnet or a squirrel cage rotor, including but not limited to the following: motors having a wirewound element, a laminated rotor or an iron core; shaded pole motors; switch reluctance motors; and stepper motors. The motor may be sychronous or asynchronous.

Accordingly, other embodiments are within the scope of the following claims.

## Claims

1. A circulator for circulating fluid within a hydronic heating or cooling system, comprising:
(a) a wet rotor circulator motor comprising:
a motor housing,
a stator disposed within the motor housing and sealed from the circulating fluid,
a rotor chamber disposed within the stator, the rotor chamber also being sealed from the circulating fluid so that the circulating fluid does not enter the rotor chamber,
a control fluid sealed within the rotor chamber,
a rotor disposed within the rotor chamber and in contact with the control fluid, and
an impeller affixed to one end of the rotor, the stator and rotor configured with respect to one another so that the rotor is caused to rotate when the stator is energized; and
(b) a pump casing fastened to the motor housing, the pump casing comprising:
an inlet end for accepting the circulating fluid flowing into the pump casing, the inlet end being configured for attachment to a pipe of the hydronic heating system,
a casing volute into which the impeller extends from the motor, the casing volute being in fluid communication with the inlet of the pump casing, and
an outlet end for discharging the circulating fluid flowing from the pump casing, the outlet end being configured for attachment to a pipe of the hydronic heating system.

2. The circulator of claim 1 wherein the rotor chamber is sealed from the circulating fluid by a pressure-equalizing seal.

3. The circulator of claim 2 wherein the pressure-equalizing seal comprises a diaphragm seal.

4. The circulator of claim 2 wherein the pressure-equalizing seal comprises a bellows seal or a dynamic piston seal.

5. The circulator of claim I or 2 wherein the rotor chamber is sealed from the circulating fluid by a dynamic seal selected from the group consisting of lip seals and v-ring seals.

6. The circulator of claim 5 wherein the dynamic seal is selected from the group consisting of spring biased single, double and triple lip seals.

7. The circulator of claim 1 or 2 wherein the rotor chamber is sealed from the circulating fluid by a mechanical seal comprising a rotating component and a stationary component.

8. The circulator of claim 7 wherein the rotating component is configured to be press-fit around a shaft portion of the rotor.

9. The circulator of claim 8 wherein the stationary component is configured to be press-fit into a receiving portion of the motor housing.

10. The circulator of claim 7 wherein the mechanical seal is configured to act as a thrust bearing, inhibiting axial movement of the rotor towards the impeller.

11. The circulator of claim 1 further comprising a rotor bushing/thrust washer assembly positioned and configured to support the rotor at an end of the rotor opposite the end to which the impeller is affixed.

12. The circulator of claim 11 wherein the rotor bushing comprises an engineered polymer.

13. A wet rotor circulator motor comprising:
a motor housing,
a stator disposed within the motor housing and sealed from the circulating fluid,
a rotor chamber disposed within the stator, the rotor chamber also being sealed from the circulating fluid so that the circulating fluid does not enter the rotor chamber,
a control fluid sealed within the rotor chamber,
a rotor disposed within the rotor chamber and in contact with the control fluid, and
an impeller affixed to one end of the rotor, the stator and rotor configured with respect to one another so that the rotor is caused to rotate when the stator is energized.

14. A circulator for circulating fluid within a hydronic heating or cooling system, comprising:
(a) a wet rotor circulator motor comprising:
a motor housing,
a stator disposed within the motor housing and sealed from the circulating fluid,
a rotor chamber disposed within the stator,
a rotor disposed within the rotor chamber and including a rotor shaft,
a dynamic seal positioned to seal against the rotor shaft on a first side of the rotor, and configured to inhibit axial movement of the rotor in a first direction,
a rotor bushing/thrust washer assembly positioned around the rotor shaft on a second side of the rotor and configured to inhibit axial movement of the rotor in a second direction, and
an impeller affixed to one end of the rotor shaft, the stator and rotor configured with respect to one another so that the rotor is caused to rotate when the stator is energized; and
(b) a pump casing fastened to the motor housing, the pump casing comprising:
an inlet end for accepting the circulating fluid flowing into the pump casing, the inlet end being configured for attachment to a pipe of the hydronic heating system,
a casing volute into which the impeller extends from the motor, the casing volute being in fluid communication with the inlet of the pump casing, and
an outlet end for discharging the circulating fluid flowing from the pump casing, the outlet end being configured for attachment to a pipe of the hydronic heating system.

15. A circulator for circulating fluid within a hydronic heating or cooling system, comprising:
(a) a wet rotor circulator motor comprising:
a motor housing,
a stator disposed within the motor housing,
a rotor chamber disposed within the stator,
a rotor disposed within the rotor chamber, and
an impeller affixed to one end of the rotor, the stator and rotor configured with respect to one another so that the rotor is caused to rotate when the stator is energized; and
(b) a pump casing fastened to the motor housing, the pump casing comprising:
an inlet end for accepting circulating fluid flouring into the pump casing, the inlet end being configured for attachment to a pipe of the hydronic heating system,
a casing volute into which the impeller extends from the motor, the casing volute being in fluid communication with the inlet of the pump casing, and
an outlet end for discharging the circulating fluid flowing from the pump casing, the outlet end being configured for attachment to a pipe of the hydronic heating system;
wherein the motor housing and pump casing are configured so that the pump casing may be fastened to the motor housing by rotating the pump casing with respect to the motor housing.

16. The circulator of claim 15 wherein the motor housing and pump casing are configured so that they may be joined by a quarter turn rotation.

17. The circulator of claim 15 wherein the motor housing and pump casing include a pin and groove attachment system.
